# EUROPEAN PATENT SPECIFICATION

(11) **EP 2 647 679 B1**
(45) Date of publication and mention of the grant of the patent: **24.09.2014**
(21) Application number: 12828567.3
(22) Date of filing: 31.08.2012
(51) Int. Cl.: C09D 133/14, B05D 7/24, C08F 290/06, C08G 18/62, C09D 175/04

(54) **CLEAR COATING COMPOSITION AND METHOD FOR FORMING MULTILAYER COATING FILM THAT USES SAME**
DURCHSICHTIGE BESCHICHTUNGSZUSAMMENSETZUNG UND VERFAHREN ZUR FORMUNG EINES MEHRLAGIGEN BESCHICHTUNGSFILMS DAMIT
COMPOSITION DE REVÊTEMENT TRANSPARENT ET PROCÉDÉ POUR LA FORMATION D'UN FILM DE REVÊTEMENT MULTICOUCHE QUI L'UTILISE

(30) Priority: 01.09.2011 JP 2011190882
(43) Date of publication of application: 09.10.2013
(73) Proprietor: Nippon Paint Co., Ltd., Osaka-shi, Osaka 531-8511 (JP)
(72) Inventor: SUZUKI, Go, Neyagawa-shi Osaka 572-8501 (JP); SUGIMOTO, Katsuhiko, Neyagawa-shi Osaka 572-8501 (JP); MIURA, Takuya, Neyagawa-shi Osaka 572-8501 (JP); TSUJIOKA, Hideaki, Neyagawa-shi Osaka 572-8501 (JP)
(74) Representative: Jones, Helen M.M.
(86) International application number: PCT/JP2012/072228
(87) International publication number: WO 2013/031976

(56) References cited:
- WO-A1-2009/075392
- WO-A1-2009/075392
- JP-A- 2007 016 231
- US-A1- 2006 281 857

## Description

### Technical Field

The present invention relates to a clear coating composition and a method for forming a multilayer coating film using the clear coating composition. Particularly, the present invention relates to a clear coating composition comprising a resin in which polycarbonate diol has been introduced as a side chain to the main chain of an acrylic polymer, and a polyisocyanate compound as a curing agent.

### Background Art

Mar resistance is one of the important qualities required for a top coating film (top clear) of automobiles. Mars on an exterior panel of an automobile are roughly classified into scratched mars formed by the contact of a relatively large and hard material, such as keys, coins, zippers of bags or clothes, garden plants, and building blocks; and abraded mars formed by rubbing with a brush or cloth with fine matter such as sand contained or by abrading with fibers themself of a brush or cloth at the time of car wash.

The former scratched mars are deep and wide, and in the state where a coating film has peeled off. In order to improve the scratched mar resistance, it becomes necessary to form a coating film harder than a contact object. The latter abraded mars are shallow and narrow, and in the state where a coating film does not peeled off and where the network structure of the resin forming the cured coating film has broken or deformed. In order to improve the abraded mar resistance, it is useful to improve the restorability of a network structure of a cured coating film by increasing crosslinking points of the network structure or improving the resilient force of the network structure.

JP 2006-176632 A (Patent Document 1) has disclosed, as a clear coating composition for automobiles having improved abraded mar resistance, a clear coating composition comprising a hydroxyl group-containing acrylic resin containing a monomer having a long chain hydroxyalkyl group having 4 or more carbon atoms and a lactone-modified monomer in a specific proportion, and a polyisocyanate compound.

However, in this coating composition, the abraded mar resistance is improved with an increase in the content of the lactone-modified monomer but the acid resistance deteriorates, and therefore it is difficult to attain both mar resistance and acid resistance simultaneously.

Then, JP 2010-285458 A (Patent Document 2) and JP 2010-285459 A (Patent Document 3) have proposed a coating composition comprising a resin in which a polycarbonate has been introduced as a side chain into the main chain of an acrylic resin by causing a carboxyl group-containing reaction product obtained via a half-esterification of a polycarbonate diol with an acid anhydride, and an epoxy group-containing acrylic resin to undergo an addition reaction.

### [Referential Art Documents]

### [Patent Document]

[Patent Document 1] JP 2006-176632 A
[Patent Document 2] JP 2010-285458 A
[Patent Document 3] JP 2010-285459 A

WO2009/075392 discloses clear coatings for automobile bodies wherein said coatings are based on glycidyl methacrylate containing polyacrylate copolymers modified by polycarbonate diol-succinic anhydride adduct, and cured with a isocyanate hardener.

US20060281857 discloses a coating agent, useful in scratch-proof finish coatings and automobile finish, wherein said coating comprises a polyol component comprising an aliphatic oligocarbonate polyol and hydroxy functional polyacrylate polyol, and cured with (poly)isocyanate cross linkers.

### Summary of the Invention

In the case that a multilayer coating film composed of a base coating film and a top coat is formed using an exterior panel of an automobile as an object to be coated, generally, a base coating composition is applied to the object to be coated to form an uncured base coating film, then, without curing it, a clear coating composition is applied onto the uncured base coating film to form an uncured clear coating film, and finally, the uncured base coating film and the uncured clear coating film are heated simultaneously to form a multilayer coating film (so-called "wet-on-wet coating").

However, when a multilayer coating film has been formed using the coating compositions of Patent Documents 2 and 3 described above as a clear coating composition, there was a problem that the color of the multilayer coating film markedly turned yellow compared with the case of failing to form a clear coating film.

One example of base coating compositions is a metallic coating composition in which a luster pigment such as aluminum flakes is incorporated for the purpose of improving design characteristics. When a base coating film has been formed using such a metallic coating composition, good design characteristics are exhibited if a luster pigment such as aluminum flakes is oriented horizontally relative to the object to be coated. However, in the case of a wet-on-wet coating, when a clear coating composition is applied onto an uncured base coating film, additives in the clear coating composition migrate into the base coating film and disorder the orientation of aluminum flakes, so that design characteristics are deteriorated.

Accordingly, an object of the present invention is to provide, based on the above-described conventional technologies, a coating composition that can attain a coating film that attains both mar resistance (especially, abraded mar resistance) and acid resistance (especially, sulfuric acid resistance) and further is excellent in design characteristics and yellowing resistance in a wet-on-wet coating system, and a method capable of forming a multilayer coating film using such a coating composition.

The present inventors studied earnestly in order to attain the above-described object and, as a result, they have found that the object can be achieved with a clear coating composition comprising a hydroxyl group-containing acrylic resin and a polyisocyanate compound as a curing agent, wherein the clear coating composition contains as the hydroxyl group-containing acrylic resin, a polycarbonate diol-grafted acrylic resin produced via polymerization of a polycarbonate diol-modified monomer obtained by a reaction of an acid anhydride group-containing ethylenically unsaturated monomer, such as maleic anhydride, with a polycarbonate diol as represented by the general formula (1) in claim 1. Thus, the present inventors came to accomplish the present invention.

That is, the invention provides a clear coating composition comprising a hydroxyl group-containing acrylic resin and a polyisocyanate compound, wherein the hydroxyl group-containing acrylic resin is a copolymer comprising an ethylenically unsaturated monomer having a polycarbonate diol residue (A) and a hydroxyl group-containing (meth)acrylic acid ester (B) as copolymerization components.

In the present invention, the copolymer constituting the hydroxyl group-containing acrylic resin may further comprises another ethylenically unsaturated monomer (C) as a copolymerization component.

In the present invention, the ethylenically unsaturated monomer having a polycarbonate diol residue is obtained by reacting an acid anhydride group-containing ethylenically unsaturated monomer (a1) with a polycarbonate diol (a2).

In one embodiment of the clear coating composition of the present invention, the amount of the polycarbonate diol residue is 10 to 40% by mass relative to the overall amount of the copolymerization components constituting the hydroxyl group-containing acrylic resin.

In one embodiment of the clear coating composition of the present invention, the acid anhydride group-containing ethylenically unsaturated monomer (a1) is at least one member selected from the group consisting of itaconic anhydride, maleic anhydride and citraconic anhydride.

In one embodiment of the clear coating composition of the present invention, the hydroxyl group-containing acrylic resin has an acid value of 1 to 15 mgKOH/g, a hydroxyl value of 80 to 200 mgKOH/g, and a number average molecular weight of 1,000 to 10,000.

The present invention also provides a method for forming a multilayer coating film having a top coat on an object to be coated, the method including a step of forming a top coat by applying the above-described clear coating composition.

According to another embodiment of the present invention, there is also provided a method for forming a multilayer coating film having a top coat on an object to be coated, the method including
a step of applying a base coating composition to the object to be coated to form an uncured base coating film,
a step of applying a clear coating composition of the present invention onto the uncured base coating film to form an uncured clear coating film, and
a step of heating the uncured base coating film and the uncured clear coating film simultaneously.

### Effect of the Invention

The clear coating composition of the present invention can improve both mar resistance (especially, abraded mar resistance) and acid resistance (especially, sulfuric acid resistance) because it contains a polycarbonate diol-grafted acrylic resin, and moreover, it prevents design characteristics from deterioration due to migration of a polycarbonate diol into an uncured base coating film because the polycarbonate diol has been grafted to an acrylic resin. Thus, the present clear coating composition is particularly useful in the case of being used for wet-on-wet coating.

### Brief Description of Drawings

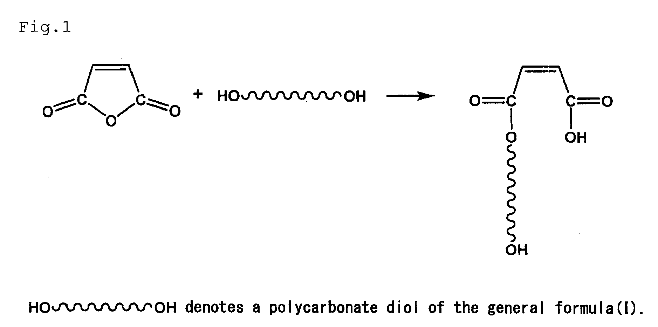

Fig. 1 is a schematic diagram of one embodiment showing a method of synthesizing an ethylenically unsaturated monomer having a polycarbonate diol residue in the present invention.

### Mode for Carrying Out the Invention

The present invention is described in detail below with reference to preferred embodiments thereof.

The hydroxyl group-containing acrylic resin contained in the clear coating composition of the present invention is a copolymer comprising an ethylenically unsaturated monomer having a polycarbonate diol residue (A), a hydroxyl group-containing (meth)acrylic acid ester (B), and optionally, another ethylenically unsaturated monomer (C) as copolymerization components.

In the present invention, the ethylenically unsaturated monomer having a polycarbonate diol residue (A) is obtained by reacting an acid anhydride group-containing ethylenically unsaturated monomer (a1) with a polycarbonate diol (a2).

The acid anhydride group-containing ethylenically unsaturated monomer (a1) used for the present invention may be any acid anhydride of ethylenically unsaturated monomer having two carboxylic acids in one molecule, and examples thereof include maleic anhydride, itaconic anhydride and citraconic anhydride. The acid anhydride group-containing ethylenically unsaturated monomer (a1) is preferably at least one member selected from the group consisting of maleic anhydride, itaconic anhydride and citraconic anhydride. In particular, from the viewpoint of easy handleability, maleic anhydride is preferred.

The polycarbonate diol (a2) used for the present invention is represented by the general formula (I): 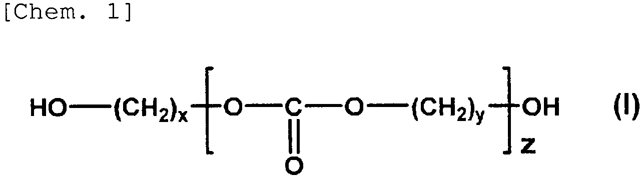 wherein x and y are each independently an integer of 1 to 8 and z is an integer of 1 to 15.

In the general formula (I) given above, x and y are each more preferably an integer of 4 to 6. That x and y exceed 8 is undesirable because if so, the resulting polycarbonate diol (a2) becomes so high in crystallinity that it becomes difficult to handle. z is more preferably an integer of 5 to 10. That z exceeds 15 is undesirable because if so, a coating film obtained from the resulting polycarbonate diol (a2) comes to have decreased chemical resistance.

In the present invention, a skeleton of the polycarbonate diol is grafted to a main chain of a hydroxyl group-containing acrylic resin and functions as a soft segment forming a network structure formed by crosslinkage in a cured film of a clear resin composition. In the present invention, since a network structure is formed using the skeleton of a soft polycarbonate diol as a soft segment, it is possible to increase a resilient force of a coating film and improve restorability of the network structure. Moreover, since terminal hydroxyl groups of polycarbonate diol skeleton have been consumed by crosslinking and therefore the network structure does not have many hydroxyl groups therein, a cured film of the clear resin composition of the present invention does not increase in water-absorbing property nor decrease in water resistance.

The reaction of the acid anhydride group-containing ethylenically unsaturated monomer (a1) with the polycarbonate diol (a2) can be carried out, for example, under a condition that the acid anhydride group-containing ethylenically unsaturated monomer (a1) reacts with one hydroxyl group of the polycarbonate diol (a2) to undergo addition at a molar ratio of 1:1 as shown in Fig.1, and for example, can be carried out using a catalyst such as dibutyltin dilaurate at a reaction temperature of 90 to 120°C.

The hydroxyl group-containing (meth)acrylic acid ester (B) used for the present invention may be any hydroxyalkyl (meth)acrylate having a hydroxyalkyl group having 2 to 9 carbon atoms, and examples thereof include 2-hydroxylethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 5-hydroxypentyl (meth)acrylate, 6-hydroxyhexyl (meth)acrylate, 7-hydroxyheptyl (meth)acrylate, 8-hydroxyoctyl (meth)acrylate, 7-methyl-8-hydroxyoctyl (meth)acrylate, 2-methyl-8-hydroxyoctyl (meth)acrylate, and 9-hydroxynonyl (meth)acrylate. In particular, from the viewpoint of being easy to obtain and excellent in handleability, 2-hydroxylethyl (meth)acrylate, 3-hydroxypropyl (meth)acrylate, 4-hydroxybutyl (meth)acrylate, 5-hydroxypentyl (meth)acrylate, 6-hydroxy hexyl (meth)acrylate, and so on, which have a hydroxyl group at an end, are preferred.

Specific examples of the hydroxyl group-containing ethylenically unsaturated monomer other than the hydroxyl group-containing (meth)acrylic acid ester (B) include adducts of 2-hydroxylethyl (meth)acrylate, 2-hydroxypropyl (meth)acrylate, allyl alcohol or methacryl alcohol with a lactone (e.g., β-propiolactone, dimethylpropiolactone, butyllactone, γ-valerolactone, ε-caprolactone, γ-caprolactone, γ-caprylolactone, crotolactone, δ-valerolactone, and 8-caprolactone). Moreover, any material having the above-mentioned soft segment as at least part of such a hydroxyl group-containing ethylenically unsaturated monomer may be used, and especially, the use of an adduct of 2-hydroxyethyl (meth)acrylate and ε-caprolactone is particularly preferable. Such hydroxyl group-containing ethylenically unsaturated monomers may be used singly or in an admixture of two or more thereof.

The hydroxyl group-containing acrylic resin according to the present invention may, as necessary, contain, in addition to the ethylenically unsaturated monomer having a polycarbonate diol residue (A) and the hydroxyl group-containing (meth)acrylic acid ester (B), other ethylenically unsaturated monomers (C) as a copolymerization component.

Examples of the other ethylenically unsaturated monomers (C) include ethylenically unsaturated monomers having a carboxyl group. Examples thereof include (meth)acrylic acid derivatives {e.g., acrylic acid, methacrylic acid, crotonic acid, isocrotonic acid, acrylic acid dimer, and α-hydro-ω-((1-oxo-2-propenyl)oxy)poly(oxy(1-oxo-1,6-hexanediyl)) resulting from the addition of ε-caprolactone to acrylic acid}, and unsaturated dibasic acids, and half-esters, half-amides, and half-thioesters thereof {e.g., maleic acid, fumaric acid, itaconic acid, and half-esters, half-amides and half-thioesters thereof}. Moreover, examples of the ethylenically unsaturated monomer other than those having a carboxyl group include (meth)acrylate ester monomers {e.g., methyl (meth)acrylate, ethyl (meth)acrylate, n-butyl (meth)acrylate, isobutyl (meth)acrylate, t-butyl (meth)acrylate, 2-ethylhexyl (meth)acrylate, lauryl (meth)acrylate, phenyl (meth)acrylate, isobornyl (meth)acrylate, cyclohexyl (meth)acrylate, t-butylcyclohexyl (meth)acrylate, dicyclopentadienyl (meth)acrylate, dihydrodicyclopentadienyl (meth)acrylate, isoboronyl (meth)acrylate, and VeoVa-9 and VeoVa-10 both produced by Shell}, polymerizable aromatic compounds (e.g., styrene, α-methylstyrene, vinyl ketone, tert-butylstyrene, parachlorostyrene, and vinylnaphthalene), polymerizable nitriles (e.g., acrylonitrile and methacrylonitrile), α-olefins (e.g., ethylene and propylene), vinyl esters (e.g., vinyl acetate and vinyl propionate), dienes (e.g., butadiene and isoprene), and, as necessary, isocyanate group-containing monomers. Such other ethylenically unsaturated monomers may be used singly or in an admixture of two or more thereof.

The polymerization method for obtaining the hydroxyl group-containing acrylic resin of the present invention is not particularly restricted, and any commonly employed method described in publicly known documents such as solution polymerization, like radical polymerization, may be used. For example, there may be employed a method of adding a suitable radical polymerization initiator and a monomer-mixed solution dropwise into a suitable solvent under normal pressure or elevated pressure, at a polymerization temperature of 60 to 200°C, preferably 100 to 160°C, over a period of 2 to 10 hours, preferably 3 to 8 hours, while stirring the same. The radical polymerization initiator used here is not particularly restricted as long as it is one commonly used when performing polymerization, and examples thereof include azo-type compounds (e.g., dimethyl-2,2'-azobisisobutyrate), and peroxides (e.g., t-butylperoxy-2-ethylhexanoate). The amount of such an initiator is generally 0.1 to 15% by mass, and preferably 0.5 to 12% by mass relative to the overall amount of unsaturated monomers. The solvent used here is not particularly restricted as long as it does not adversely affect the reaction, and examples thereof include glycol solvents, ketones, and hydrocarbon solvents (e.g., propylene glycol monomethylether acetate and xylene). Further, in order to adjust the molecular weight, mercaptan such as lauryl mercaptan, or a chain transfer agent such as α-methylstyrene dimer may be used as required.

The hydroxyl group-containing acrylic resin according to the present invention preferably has a number average molecular weight (Mn) of 1,000 to 10,000, and more preferably 2,000 to 8,000. A number average molecular weight below the lower limit mentioned above tends to cause the coating workability and the mixed-layer property with an uncured base coating film in a wet-on-wet coating system to decrease, whereas a number average molecular weight exceeding the above-mentioned upper limit tends to cause a deterioration in workability due to a decrease in the nonvolatile amount at the time of coating. Further, the number average molecular weight of the hydroxyl group-containing acrylic resin is preferably within the range of 3,000 to 7,000 from the viewpoint of the external appearance of a cured film.

The number average molecular weight and the weight average molecular weight as described herein are measured by gel permeation chromatography (GPC) and determined by polystyrene conversion.

The acid value of the hydroxyl group-containing acrylic resin according to the present invention is preferably 1 to 25 mgKOH/g, and more preferably 2 to 21 mgKOH/g. An acid value exceeding the above-mentioned upper limit tends to cause a decrease in the water resistance of a resulting cured film, whereas an acid value below the above-mentioned lower limit tends to cause a decrease in the curability of a cured film.

An acid group or a hydroxyl group may be contained in any of an ethylenically unsaturated monomer having a polycarbonate diol residue (A), a hydroxyl group-containing (meth)acrylic acid ester (B), and other ethylenically unsaturated monomers (C) optionally contained, which are the copolymerization components constituting the hydroxyl group-containing acrylic resin.

The hydroxyl value of the hydroxyl group-containing acrylic resin according to the present invention is preferably 80 to 200 mgKOH/g, and more preferably 90 to 180 mgKOH/g. A hydroxyl value exceeding the above-mentioned upper limit tends to cause a decrease in the water resistance of a resulting cured film, whereas a hydroxyl value below the above-mentioned lower limit tends to cause a decrease in the curability of a cured film.

In one embodiment of the clear coating composition of the present invention, the amount of the polycarbonate diol residue is preferably 10 to 40% by mass relative to the overall amount of the copolymerization components constituting the hydroxyl group-containing acrylic resin. Here, the amount of the polycarbonate diol residue relative to the overall amount of the copolymerization components constituting the above-mentioned hydroxyl group-containing acrylic resin is defined as being a mixing ratio of the polycarbonate diol to the overall amount of the monomers to be used for producing the hydroxyl group-containing acrylic resin at the time of obtaining the hydroxyl group-containing acrylic resin according to the present invention. In other words, it means that the mixing ratio of the polycarbonate diol is 10 to 40% by mass on the basis of the overall amount of the monomers to be used for producing the hydroxyl group-containing acrylic resin.

An amount of the polycarbonate diol residue below the above-mentioned lower limit tends to cause a decrease in the mar resistance of a resulting cured film, whereas an amount of the polycarbonate diol residue exceeding the above-mentioned upper limit tends to cause a decrease in the acid resistance of a resulting cured film. In terms of the film physical properties of a resulting cured film, the above-mentioned range is preferably 12 to 35% by mass, and more preferably 14 to 31% by mass.

It is preferable that the mixing ratio of the overall amount of the hydroxyl group-containing (meth)acrylic acid ester (B) and other ethylenically unsaturated monomer containing a hydroxyl group at the time of obtaining the hydroxyl group-containing acrylic resin according to the present invention is 5 to 50% by mass on the basis of the overall amount of the monomers to be used for producing the hydroxyl group-containing acrylic resin. When the mixing ratio of the overall amount of the ethylenically unsaturated monomer containing a hydroxyl group is less than the above-mentioned lower limit, the production stability tends to deteriorate, whereas when the mixing ratio exceeds the upper limit, the water resistance of a resulting cured film tends to deteriorate.

Examples of the polyisocyanate used as a curing agent in the clear coating composition of the present invention include aliphatic, alicyclic, aromatic group-containing aliphatic, or aromatic polyisocyanate compounds, and preferable examples include diisocyanates, dimers of diisocyanates, and trimers of diisocyanates (preferably, isocyanurate type isocyanates (namely, isocyanurates)). Such a polyisocyanate compound may be one of asymmetric type.

As the diisocyanate, diisocyanates generally having 5 to 24, preferably 6 to 18 carbon atoms can be used. Examples of such diisocyanates include trimethylene diisocyanate, tetramethylene diisocyanate, hexamethylene diisocyanate (HDI), 2,2,4-trimethylhexane diisocyanate, undecane diisocyanate-(1,11), lysine ester diisocyanate, cyclohexane-1,3- and 1,4-diisocyanates, 1-isocyanato-3-isocyanatomethyl-3,5,5-trimethylcyclohexane (isophorone diisocyanate: IPDI), 4,4'-diisocyanatodicyclomethane, ω,ω'-dipropylether diisocyanate, thiodipropyl diisocyanate, cyclohexyl-1,4-diisocyanate, dicyclohexylmethane-4,4'-diisocyanate, 1,5-dimethyl-2,4-bis(isocyanatomethyl)benzene, 1,5-trimethyl-2,4-bis(ω-isocyanatoethyl)-benzene, 1,3,5-trimethyl-2,4-bis(isocyanatomethyl)benzene, 1,3,5-triethyl-2,4-bis(isocyanatomethyl)benzene, and dicyclohexyldimethylmethane-4,4'-diisocyanate. Further, there may also be used an aromatic diisocyanate such as 2,4-diisocyanatotoluene and/or 2,6-diisocyanatotoluene, 4,4'-diisocyanatodiphenylmethane, and 1,4-diisocyanatoisopropylbenzene. Additionally, examples of the isocyanurate type isocyanates may include trimers of the above-mentioned diisocyanates. Such polyisocyanate compounds may be used singly or in an admixture of two or more thereof.

The polyisocyanate compound used in the present invention is preferably one at least part of which is an isocyanurate type isocyanate compound. In other words, in the present invention, the above-mentioned isocyanurate type isocyanate compound may also be used in the form of a mixture in combination with other aliphatic, alicyclic, aromatic group-containing aliphatic, or aromatic polyisocyanate compound (suitably, the above-mentioned diisocyanate). In this case, the inclusion ratio of the isocyanurate type isocyanate compound in the overall amount of the polyisocyanate compound is preferably not lower than 60% by mass. An inclusion ratio of the isocyanurate type isocyanate compound below the above-mentioned lower limit tends to make it difficult to obtain a cured film with sufficient acid resistance.

The curing system in the clear coating composition of the present invention containing the hydroxyl group-containing acrylic resin and the polyisocyanate compound is as follows. Specifically, the isocyanate group of the polyisocyanate compound and the hydroxyl group in the hydroxyl group-containing acrylic resin are reacted with each other by heating to form a cross-linking point, and curing progresses as the hydroxyl group-containing acrylic resin undergoes cross-linking via the polyisocyanate compound, thereby a high crosslink density is achieved. Further, in the cured film formed by performing heating and curing after forming a film using the clear coating composition of the present invention, a polycarbonate skeleton comes to be present in the cross-linking chain. The presence of the polycarbonate skeleton in the cross-linking chain effectively imparts good mar resistance to the cured film.

The clear coating composition of the present invention contains a hydroxyl group-containing acrylic resin as a cured film forming resin and a polyisocyanate compound as a curing agent, and it is preferable that the mixing ratio of the hydroxyl group-containing acrylic resin and the polyisocyanate compound is such a ratio that the number of isocyanate groups in the polyisocyanate compound falls within the range from 0.5 to 1.5 relative to the number of hydroxyl groups in the hydroxyl group-containing acrylic resin that is taken as 1. When a mixing ratio of the polyisocyanate compound is less than the above-mentioned lower limit, there is a tendency that it is impossible to obtain sufficient curing. On the other hand, when a mixing ratio is more than the above-mentioned upper limit, there is a tendency that unreacted isocyanate groups are made to react with moisture in the air. As a result, the dynamic glass transition temperature (Tm) of a cured film increases, leading to deterioration in mar resistance.

The method for curing the curable resin composition of the present invention and conditions thereof are not particularly restricted, and conventional methods are adopted suitably and, for example, a method of performing heating and curing at a temperature of about 100 to about 180°C is preferably adopted.

Various kinds of cured films such as a coating film, a coating material, and a resin film being excellent in mar resistance (especially, abraded mar resistance) and acid resistance (especially, sulfuric acid resistance) can be obtained by curing the above-described clear coating composition of the present invention.

It is preferable that the clear coating composition of the present invention has been prepared in such a way that a crosslink density of a cured film to be obtained becomes not less than 0.8 × 10⁻³ mol/cc (particularly preferably 1.0 × 10⁻³ to 2.5 × 10⁻³ mol/cc). When the crosslink density of a cured film to be obtained is below the above-mentioned lower limit, there is a tendency that the stain resistance against water stain and the like is not improved sufficiently and the mar resistance deteriorates.

Such crosslink density is determined by the following method. Specifically, the dynamic elastic modulus (E') at the time when a temperature is raised is determined by using a forced stretching vibration-type of viscoelasticity measurement apparatus (Vibron available from Orientec Co., Ltd.). Subsequently, the crosslink density is calculated from the temperature at which the value E' is at the minimum and the minimum value of E' by using the following equation. The measurement frequency is set at 11 Hz. E' = 3nRT (n: crosslink density, R: gas constant, T: absolute temperature).

In addition to the above-described components, an ultraviolet absorber, a hindered amine light stabilizer, an antioxidant, crosslinked resin particles, a surface conditioner, and so on may be incorporated into the clear coating composition of the present invention. In the event that the crosslinked resin particles are used as a viscosity controller of a coating composition, it is preferable to incorporate them in a proportion between a lower limit of 0.01% by mass and an upper limit of 10% by mass relative to the resin solid content of the clear coating composition of the present invention. The lower limit is more preferably 0.1% by mass, and the upper limit is more preferably 5% by mass. When the amount of the crosslinked resin particles added is more than 10% by mass, there is a tendency that the external appearance of a resulting coating film deteriorates. On the other hand, when it is less than 0.01% by mass, there is a risk that the viscosity may not be controlled successfully.

The clear coating composition of the present invention can be applied by spray coating, brush coating, dip coating, roll coating, flow coating, or the like. The clear coating composition of the present invention can be used advantageously on various types of substrates, for example, wood, metal, glass, cloth, plastics, foam, and so on, particularly on plastics and the surface of metal (e.g., iron, aluminum, and an alloy thereof). In particular, the clear coating composition of the present invention can be used suitably as a clear coating composition for automobiles.

Next, the method of forming a multilayer coating film of the present invention will be described. Specifically, the method of forming a multilayer coating film of the present invention is a method of forming a multilayer coating film having a top coat on an object to be coated. The method is characterized in that the clear coating composition of the present invention is applied as the top coat.

While the various types of substrates mentioned above may be used as the object to be coated, a metal molding of iron, aluminum, and an alloy thereof, a plastic molding, or the like may be used as the object to be coated on which a multilayer coating film for an automobile is to be formed. Of these, the method is preferably applied to a metal molding, to which an electrostatic coating can be performed. The surface of the object to be coated has preferably been treated with chemical conversion. Furthermore, an electrodeposited coating film may have been formed on the object to be coated. While the electrodeposition-coating composition may be cationic or anionic one, a cationic electrodeposition-coating composition is preferred from the viewpoint of corrosion prevention.

Additionally, an intermediate coating film may be further formed as required. An intermediate coating composition is used for forming the intermediate coating film. The intermediate coating composition is not particularly limited, and there may be used, for example, aqueous or organic solvent-based ones well known to those skilled in the art.

In the method for forming a multilayer coating film of the present invention, it is preferable that a base coating composition is applied onto the object to be coated to obtain an uncured base coating film, a clear coating composition of the present invention is applied onto the uncured base coating film to obtain an uncured clear coating film, and then the uncured base coating film and the uncured clear coating film are heated and cured simultaneously. It is also possible to apply the clear coating composition of the present invention as a second clear onto base and clear cured coating films, and then heat it to cure.

The base coating composition is not particularly restricted and may contain, for example, a coating film-forming resin, a curing agent, a coloring pigment such as an organic, inorganic, or luster material, and an extender pigment. The form of the base coating composition is not particularly limited and may be water-based or organic solvent-type base coating composition.

The method of applying the base coating composition onto the object to be coated is not particularly limited and may include an air electrostatic spray coating method, or a rotary-spraying electrostatic coating method, which is usually called "µµ (Micro-Micro) Bell," µ (Micro) Bell," or "Meta Bell". From the viewpoint of an external appearance improvement, multi-stage coating method using these methods, or a coating method in which these methods are combined is preferable.

The thickness of the coating film to be formed of the base coating composition in the method of forming a multilayer coating film according to the present invention is preferably within the range of 10 to 20 µm as a dry film thickness. In the method of forming a multilayer coating film according to the present invention, in a case where the base coating composition is water-based, it is desirable, in order to obtain a well-finished coating film, that the uncured base coating film has been dried by heating at 40 to 100°C for 2 to 10 minutes prior to the application of the clear coating composition.

In the method of forming a multilayer coating film according to the present invention, specific examples of the method of applying the clear coating composition of the present invention include a rotary-spraying electrostatic coating method called "µµ (Micro-Micro) Bell," "µ (Micro) Bell," or the like.

The thickness of the coating film to be formed of the clear coating composition in the method of forming a multilayer coating film according to the present invention is preferably within the range of 30 to 45 µm as a dry film thickness. It is also preferable that the uncured base coating film and the uncured clear coating film which have been formed by the above-described method are simultaneously heated to be cured. Thereby, a multilayer coating film is formed. The heating is performed preferably at a temperature within the range of 100 to 180°C, and more preferably 120 to 160°C. The heat-curing time varies depending on the curing temperature, and so on. The heat-curing time of 10 to 30 minutes is suitable when the above heat-curing temperature is used.

The film thickness of the multilayer coating film thus obtained is preferably within the range of 40 to 65 µm. The multilayer coating film obtained by the method of forming a multilayer coating film of the present invention is excellent in mar resistance (especially, abraded mar resistance) and acid resistance (especially, sulfuric acid resistance).

### Examples

The present invention will be described more specifically below on the basis of examples and comparative examples, but the present invention is not limited to the examples. When so simply stated herein, "%" shall mean "% by mass" and "part" shall mean "part by mass."

### (Synthesis Example 1) Synthesis of maleic acid mono(polycarbonate)ester macromer A

Into a 2-L glass container equipped with a stirring blade, a thermometer, a cooling tube, and an air introducing tube, 108.2 g of maleic anhydride and 666 g of propylene glycol monomethyl ether acetate were added, then heated at 60°C under an air atmosphere to dissolve the maleic anhydride. Then, 891.8 g of polycarbonate diol (DURANOL T-5650J, produced by Asahi Kasei Chemicals Corporation; in the general formula (I), x = 5, y = 6, z = 7; number average molecular weight = 800, OH value = 130 to 150 mgKOH/g, acid value = 0.5 mgKOH/g or less, nonvolatile components = 100%) and 5.0 g of p-methoxyphenol were added, heated at 110°C under an air atmosphere, and then held for 3 hours. That the absorption (1785 cm⁻¹) due to an acid anhydride had been disappeared was confirmed using a Fourier transform infrared spectrophotometer (FT/IR-4100 manufactured by Jasco Corp.), and thus maleic acid mono(polycarbonate)ester macromer A containing 60.1% of nonvolatile components was obtained.

### (Synthesis Example 2) Synthesis of hexahydrophthalic acid mono(polycarbonate) ester macromer B

Into a 2-L glass container equipped with a stirring blade, a thermometer, a cooling tube, and a nitrogen introducing tube, 161.7 g of hexahydrophthalic anhydride and 666 g of propylene glycol monomethyl ether acetate were added, then heated at 60°C, and hexahydrophthalic anhydride was dissolved. Then, 840.0 g of polycarbonate diol (DURANOL T-5650J, produced by Asahi Kasei Chemicals Corporation; number average molecular weight = 800, OH value = 130 to 150 mgKOH/g, acid value = 0.5 mgKOH/g or less, nonvolatile components = 100%) was added, heated at 110°C under a nitrogen atmosphere, and then held for 3 hours. That the absorption (1785 cm⁻¹) due to an acid anhydride had been disappeared was confirmed using a Fourier transform infrared spectrophotometer (FT/IR-4100 manufactured by Jasco Corp.), and thus hexahydrophthalic acid mono(polycarbonate)ester macromer B containing 60.1% of nonvolatile components was obtained.

### (Synthesis Example 3) Synthesis of hydroxyl group-containing acrylic resin (a)

Into a 2-L glass container equipped with a stirring blade, a nitrogen introducing tube, a cooling condenser, and a dropping funnel, 200.25 g of butyl acetate and 189.18 g of propylene glycol monomethyl ether acetate were added, and then heated at 120°C under a nitrogen atmosphere. Using the dropping funnel, a mixed liquid of an initiator and monomers composed of 54.0 g of butyl acetate, 112.5 g of tert-butylperoxy 2-ethylhexanoate, 252.60 g of the maleic acid mono(polycarbonate)ester macromer A obtained in Synthesis Example 1, 180 g of styrene, 110.16 g of 2-ethylhexyl acrylate, 187.92 g of 2-ethylhexyl methacrylate, and 270.36 g of 2-hydroxyethyl methacrylate was added dropwise into that container at a constant rate over three hours. Thereafter, the mixture was maintained at 120°C for 0.5 hours, and then an initiator mixture composed of 4.5 g of tert-butylperoxy 2-ethylhexanoate dissolved in 36.0 g of butyl acetate was added dropwise at a constant rate over 0.5 hours. Furthermore, the mixture was heated at 120°C for 1 hour continuously, and thus a targeted hydroxyl group-containing acrylic resin (a) was obtained.

The hydroxyl group-containing acrylic resin (a) thus synthesized had a number average molecular weight of 3,200 and a weight average molecular weight of 9,600, which were converted on the standard polystyrene and obtained by using GPC. The hydroxyl value was 140 mgKOH/g, the resin solid content was 60.1%, and the amount of a polycarbonate diol residue was 15% by mass. The composition and the physical properties of the above-described hydroxyl group-containing acrylic resin (a) are shown in Table 1.

### (Synthesis Examples 4 to 7) Synthesis of hydroxyl group-containing acrylic resins (b) to (e-1)

Hydroxyl group-containing acrylic resins (b) to (e-1) were synthesized in the same manner as Synthesis Example 1 except for using the monomer components, solvent, and polymerization initiator given in Table 1 and setting their loadings as given in Table 1. The PLACCEL FM-2 used was a 1:2 adduct of 2-hydroxyethyl methacrylate and ε-caprolactone (produced by Daicel Industries).

The number average molecular weight (Mn), the weight average molecular weight (Mw), the hydroxyl value, the resin solid content, and the polycarbonate diol mixing ratio of the synthesized hydroxyl group-containing acrylic resins (b) to (e-1) were respectively as shown in Table 1.

### (Synthesis Example 8) Synthesis of polycarbonate diol-modified acrylic resin (e-2)

Into a 2-L glass container equipped with a stirring blade, a thermometer, a cooling tube, and an air introducing tube, 326.15 g of the hexahydrophthalic acid mono(polycarbonate) ester macromer B obtained in Synthesis Example 2 and 1467.50 g of the hydroxyl group-containing acrylic resin (e-1) obtained in Synthesis Example 7 were added, then heated at 150°C under a nitrogen atmosphere, and then held for 4 hours. Thus, a polycarbonate diol-modified acrylic resin (e-2) containing 60.1% of nonvolatile components was obtained.

**[Table 1]**

| Hydroxyl group-containing acrylic resin copolymer | (a) | (b) | (c) | (d) | (e-1) |
|---|---|---|---|---|---|
| Butyl acetate (solvent) (g) | 290.3 | 290.3 | 290.3 | 290.3 | 290.3 |
| Propylene glycol monomethyl ether acetate (solvent) (g) | 189.2 | 88.2 | 290.3 | 290.3 | 160.2 |
| tert-Butylperoxy-2-ethylhexanoate (polymerization initiator) (g) | 117.0 | 117.0 | 103.5 | 103.5 | 117.0 |
| Styrene (g) | 180.0 | 180.0 | 180.0 | 180.0 | 180.0 |
| n-Butyl methacrylate (g) | | | 121.7 | 130.5 | |
| 2-Ethylhexyl acrylate (g) | 110.2 | 117.0 | 118.8 | | 110.2 |
| 2-Ethylhexyl methacrylate (g) | 187.9 | 51.5 | 178.2 | 153.1 | 301.3 |
| 2-Hydroxyethyl methacrylate (g) | 270.4 | 248.4 | 292.3 | 215.3 | 279.4 |
| PLACCEL FM-2 | | | | 212.1 | |
| Glycidyl methacrylate | | | | | 29.14 |
| Methacrylic acid (g) | | | 9.0 | 9.0 | |
| Maleic acid mono(polycarbonate)ester macromer A (g) | 252.6 | 505.2 | | | |
| Total of monomers | 900.3 | 900.5 | 900.0 | 900.0 | 900.0 |
| Number average molecular weight (Mn) | 3200 | 3300 | 3500 | 3400 | 3200 |
| Weight average molecular weight (Mw) | 9600 | 10200 | 9200 | 9300 | 9400 |
| Mw/Mn | 3.00 | 3.09 | 2.63 | 2.74 | 2.94 |
| Resin solid acid value | 10.5 | 21.1 | 6.5 | 6.5 | 0 |
| Hydroxyl value (mgKOH/g) | 140 | 140 | 140 | 140 | 130 |
| Resin solid content (% by mass) | 60.1 | 60.6 | 60.0 | 60 | 60.1 |
| Loading of polycarbonate present in resin solid (% by mass) | 15.0 | 30.0 | 0.0 | 0 | 15.0 |
| Loading of lactone present in resin solid (% by mass) | 0 | 0 | 0 | 15.0 | 0 |

### (Examples 1 and 2 and Comparative Examples 1 to 6)

The clear coating compositions of Examples 1 and 2 and Comparative Examples 1 to 6 were obtained by mixing the components according to the mixing ratio shown in Table 2, and stirring the mixture with a disper. The clear coating compositions were each diluted with a thinner composed of propylene glycol monomethylether acetate/3-ethyl ethoxypropionate = 1/2 (mass ratio) so that a condition of 25 seconds/20°C might be obtained using a No. 4 ford cup.

Subsequently, to a test plate prepared by electrodeposition-coating a zinc phosphate-treated dull steel plate sized 150 x 300 x 0.8 mm with Power Top U-50 (a cationic electrodeposition coating composition produced by Nippon Paint Co., Ltd.) and ORGA P-2 (an intermediate coating composition produced by Nippon Paint Co., Ltd.) in dry film thicknesses of 25 µm and 40 µm, respectively, AR-2000 silver metallic (aqueous base coating composition produced by Nippon Paint Co., Ltd.) was air spray-coated in a dry film thickness of 15 µm and then dried at 80°C for 5 minutes. Thus, an uncured base coating film was formed. On this, a viscosity-adjusted clear coating composition was air spray-coated in a dry film thickness of 40 µm to form an uncured clear coating film, then set for 7 minutes, and baked and cured at 140°C for 25 minutes, so that a multilayer coating film was formed.

### <Abraded mar resistance test>

The abraded mar resistance of the multilayer coating films obtained by using the clear coating compositions of Examples 1 and 2 and Comparative Examples 1 to 6 was evaluated by using the following evaluation method.

First, a test dust composition composed of 15 g of a test dust (mixture of 7 kinds, particle size: 27 to 31 µm) and 100 g of water was spread on the base of a miniature car washer produced by simulating an actual car washer, and then the miniature car washer was rotated (45 rpm) to undergo one reciprocation without flowing water, thereby allowing the dust to adhere onto the car wash brush. Thereafter, a test plate (70 mm × 150 mm) was fixed on the base, and the miniature car washer was rotated (96 rpm) to undergo three reciprocations without flowing water. After the test, water washing and drying were performed. Then, the 20° gloss of the coated plate was measured with a digital deformation gloss meter UGV-6P (manufactured by Suga Test Instruments Co., Ltd.), and a gloss retention (%), which is a ratio to the 20° gloss before the test, was calculated. The results are shown in Table 2.

### <Design characteristic>

The external appearance of the multilayer coating films obtained by using the clear coating compositions of Examples 1 and 2 and Comparative Examples 1 to 6 was evaluated by using the following evaluation method.

The difference in coating film external appearance between a test plate obtained and a base single film with no clear coating was evaluated by visual observation. The results are shown in Table 2.
5: Almost no color difference in brightness from the base single film is recognized.
3: Some color difference in brightness from the base single film is recognized.
1: Remarkable color difference in brightness from the base single film is recognized.

### <Acid resistance test>

For multilayer coating films obtained using the clear coating compositions of Examples 1 to 2 and Comparative Examples 1 to 6, the evaluation of acid resistance with a 40% aqueous solution of sulfuric acid was performed by the evaluation method described below.

First, the 40% aqueous solution of sulfuric acid was prepared using ion exchange water and sulfuric acid of guaranteed reagent. Next, 0.5 ml of the aqueous sulfuric acid solution was given dropwise on each of the multilayer coating films obtained using the clear coating compositions of Examples 1 to 2 and Comparative Examples 1 to 6, held at 80°C for 30 minutes in a heated oven, and then washed with water. Thereafter, trace points on the multilayer coating films were observed visually and evaluated according to the following criteria. The results are shown in Table 2.
5: Almost no swelling and almost no shrinkage are recognized.
3: Some stain is recognized, or swelling and shrinkage are recognized but peeling of a coating film is not recognized.
1: Remarkable stain, whitening, and blistering are recognized, and the coating film has been peeled.

### <Yellowing resistance >

A half area of the surface of a steel panel of 150 mm × 75 mm × 0.8 mm on which an electrodeposition coating film, an intermediate coating film, and a white top solid coating film having an L value of 84, an α-value of -1.1, and a b-value of 1.4 had been formed in order was masked with aluminum foil, and then a clear coating composition was applied in a dry film thickness of 40 µm. Then, the mask was removed, and the panel was heated and cured at 160°C for 60 minutes. Thus, there was prepared the test panel on which the white top solid coating film remained in a half area of the steel panel and a clear coating film was formed in the other half area.

The b values of the area of the white top solid coating film and the area of the clear coating film of the resulting test panel were measured by an SM color computer, model SM-T45 (manufactured by Suga Test Instruments Co., Ltd.), and then the color difference (Δb value: the b value of the clear coating film area - the b value of the white top solid coating film area) was calculated. The results are shown in Table 2.

**[Table 2]**

| Name of resin | Loading of polycarbonate present in resin solid (% by mass) | Loading of lactone present in resin solid (% by mass) | Example (solid loading) (% by mass) | | Comparative Example (solid loading) (% by mass) | | | | | |
|---|---|---|---|---|---|---|---|---|---|---|
| | | | 1 | 2 | 1 | 2 | 3 | 4 | 5 | 6 |
| Hydroxyl group-containing acrylic resin copolymer (a) | 15.0 | 0.0 | 65.4 | | | | | | | |
| Hydroxyl group-containing acrylic resin copolymer (b) | 30.0 | 0.0 | 0.0 | 65.4 | | | | | | |
| Hydroxyl group-containing acrylic resin copolymer (c) | 0.0 | 0.0 | | | 65.4 | 55.6 | 45.8 | 54.2 | | |
| Hydroxyl group-containing acrylic resin copolymer (d) | 0.0 | 15.0 | | | | | | | 65.4 | |
| Hydroxyl group-containing acrylic resin copolymer (e-2) | 15.0 | 0.0 | | | | | | | | 65.4 |
| Polycarbonate polyol T-5650J | 100.0 | 0.0 | | | | 9.8 | 19.6 | | | |
| Lactone polyol PLACCEL 308 | 0.0 | 100.0 | | | | | | 9.8 | | |
| Isocyanurate type isocyanate curing agent SUMIDULE N3300 | 0.0 | 0.0 | 34.6 | 34.6 | 34.6 | 34.6 | 34.6 | 36.0 | 34.6 | 34.6 |
| Loading of polycarbonate present in clear coating composition (% by mass) | | | 9.8 | 19.6 | 0.0 | 9.8 | 19.6 | 0.0 | 0.0 | 9.8 |
| Loading of lactone present in clear coating composition (% by mass) | | | 0.0 | 0.0 | 0.0 | 0.0 | 0.0 | 9.8 | 9.8 | 0.0 |
| Car wash abraded mar resistance | | | 85.0 | 93.0 | 60.0 | 86.0 | 92.0 | 85.0 | 85.0 | 84.0 |
| Design characteristic | | | 5.0 | 5.0 | 5.0 | 3.0 | 1.0 | 3.0 | 5.0 | 5.0 |
| Acid resistance | | | 5.0 | 5.0 | 5.0 | 5.0 | 5.0 | 1.0 | 1.0 | 5.0 |
| Yellowing resistance (Δb) | | | 1.2 | 1.2 | 1.2 | 1.2 | 1.2 | 1.3 | 1.2 | 2.7 |

As is clear from the results shown in Table 2, the multilayer coating films obtained by using the clear coating compositions of Examples 1 and 2 in the present invention exhibited excellent mar resistance (abraded mar resistance), design characteristic, acid resistance (sulfuric acid resistance), and yellowing resistance, simultaneously. This reason is considered to be that the resilient force of the clear coating film was increased by the inclusion of a polycarbonate diol residue in an acrylic resin and thus a coating film having a network structure with an improved restorability was formed. Moreover, the additional reason is considered to be that the design characteristic is not deteriorated because polycarbonate diol does not migrate to an uncured base coating film.

However, the multilayer coating film obtained using the clear coating composition of Comparative Example 1 comprising no polycarbonate diol residue was poor in mar resistance (abraded mar resistance), and in Comparative Examples 2 and 3 where polycarbonate polyol had been mixed with the clear coating composition of Comparative Example 1, the abraded mar resistance was good, but the design characteristic deteriorated due to the occurrence of migration to the uncured base coating film because the polycarbonate polyol had not been grafted to the acrylic resin. In Comparative Example 4 where lactone polyol was mixed as a soft ingredient instead of polycarbonate polyol and Comparative Example 5 where a hydroxyl group-containing acrylic resin with a lactone component copolymerized was used, the design characteristic and the acid resistance deteriorated.

On the other hand, in Comparative Example 6 where a polycarbonate diol-modified acrylic resin (e-2), in which a polycarbonate diol residue had been introduced by a production method different from that used for the hydroxyl group-containing acrylic resin contained in the clear coating composition of the present invention, was used, the yellowing resistance deteriorated. This reason is considered to be that during the synthesis of the polycarbonate diol-modified acrylic resin (e-2), the resin itself has been turned into a yellow color and the color was taken in as the color of the coating film.

### Industrial Applicability

As described above, according to the present invention, it becomes possible to obtain a clear coating composition capable of forming a cured film (e.g., coating film) that exhibits excellent mar resistance (abraded mar resistance), design characteristic, acid resistance (sulfuric acid resistance), and yellowing resistance, simultaneously. Moreover, according to the method for forming a multilayer coating film of the present invention using the clear coating composition of the present invention, it becomes possible to efficiently and reliably form a multilayer coating film for automobiles that exhibits excellent mar resistance (abraded mar resistance), design characteristic, acid resistance (sulfuric acid resistance), and yellowing resistance, simultaneously.

## Claims

1. A clear coating composition comprising a hydroxyl group-containing acrylic resin and a polyisocyanate compound, wherein
the hydroxyl group-containing acrylic resin is a copolymer comprising an ethylenically unsaturated monomer having a polycarbonate diol residue (A) and a hydroxyl group-containing (meth)acrylic acid ester (B) as copolymerization components,
the ethylenically unsaturated monomer having a polycarbonate diol residue is a reaction product of an acid anhydride group-containing ethylenically unsaturated monomer (a1) and a polycarbonate diol (a2), and the polycarbonate diol is represented by the general formula (I) : 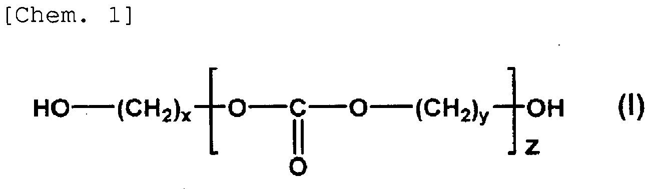 wherein x and y are each independently an integer of 1 to 8 and z is an integer of 1 to 15.

2. The clear coating composition according to claim 1, wherein the polyisocyanate compound is at least partly composed of an isocyanurate type isocyanate compound.

3. The clear coating composition according to claim 1 or 2, wherein the mixing ratio of the hydroxyl group-containing acrylic resin and the polyisocyanate compound is such a ratio that the number of the isocyanate groups in the polyisocyanate compound falls within the range of 0.5 to 1.5 relative to the number of the hydroxyl groups in the hydroxyl group-containing acrylic resin taken as 1.

4. The clear coating composition according to any one of claims 1 to 3, wherein the amount of the polycarbonate diol residue is 10 to 40% by mass relative to the overall amount of the copolymerization components constituting the hydroxyl group-containing acrylic resin.

5. The clear coating composition according to any one of claims 1 to 4, wherein the acid anhydride group-containing ethylenically unsaturated monomer (a1) is at least one member selected from the group consisting of itaconic anhydride, maleic anhydride and citraconic anhydride.

6. The clear coating composition according to any one of claims 1 to 5, wherein the hydroxyl group-containing acrylic resin has an acid value of 1 to 25 mgKOH/g, a hydroxyl value of 80 to 200 mgKOH/g, and a number average molecular weight of 1,000 to 10,000.

7. A method for forming a multilayer coating film having a top coat on an object to be coated, comprising a step of applying the clear coating composition according to any one of claims 1 to 6 to form a top coat.

8. A method for forming a multilayer coating film having a top coat on an object to be coated, comprising
a step of applying a base coating composition to the object to be coated to form an uncured base coating film,
a step of applying the clear coating composition according to any one of claims 1 to 6 onto the uncured base coating film to form an uncured clear coating film, and
a step of heating the uncured base coating film and the uncured clear coating film simultaneously.

## Patentansprüche

1. Klare Beschichtungszusammensetzung, umfassend ein Hydroxylgruppen enthaltendes Acrylharz und eine Polyisocyanatverbindung, wobei
das Hydroxylgruppen enthaltende Acrylharz ein Copolymer ist, umfassend ein ethylenisch ungesättigtes Monomer mit einem Polycarbonatdiolrest (A) und einem Hydroxylgruppen enthaltenden (Meth)acrylester (B) als Colymerisationskomponenten,
das ethylenisch ungesättigte Monomer mit einem Polycarbonatdiolrest ein Reaktionsprodukt eines Säureanhydridgruppen enthaltenden ethylenisch ungesättigten Monomers (a1) und eines Polycarbonatdiols (a2) ist, und das Polycarbonatdiol durch die allgemeine Formel (I) dargestellt ist: 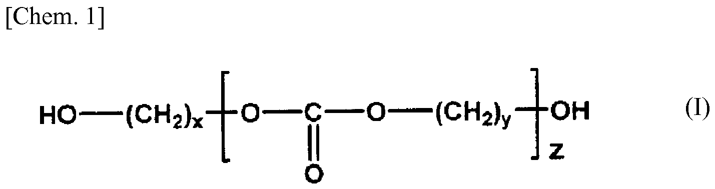 wobei x und y jeweils unabhängig eine ganze Zahl von 1 bis 8 sind und z eine ganze Zahl von 1 bis 15 ist.

2. Klare Beschichtungszusammensetzung nach Anspruch 1, wobei die Polyisocyanatverbindung mindestens teilweise aus einer Isocyanatverbindung des Isocyanurattyps zusammengesetzt ist.

3. Klare Beschichtungszusammensetzung nach Anspruch 1 oder 2, wobei das Mischungsverhältnis des Hydroxylgruppen enthaltenden Acrylharzes und der Polyisocyanatverbindung in einem Verhältnis dergestalt ist, dass die Zahl der Isocyanatgruppen in der Polyisocyanatverbindung in den Bereich von 0,5 bis 1,5 fällt, bezogen auf die Zahl der Hydroxylgruppen im Hydroxylgruppen enthaltenden Acrylharz, die als 1 angesetzt ist.

4. Klare Beschichtungszusammensetzung nach einem der Ansprüche 1 bis 3, wobei die Menge des Polycarbonatdiolrests 10 bis 40 Masse-% beträgt, bezogen auf die Gesamtmenge der Copolymerisationskomponenten, die das Hydroxylgruppen enthaltende Acrylharz bildet.

5. Klare Beschichtungszusammensetzung nach einem der Ansprüche 1 bis 4, wobei das Säureanhydridgruppen enthaltende ethylenisch ungesättigte Monomer (a1) mindestens ein Glied ist, das aus der Gruppe ausgewählt ist, die aus Itaconsäureanhydrid, Maleinsäureanhydrid und Citraconsäureanhydrid besteht.

6. Klare Beschichtungszusammensetzung nach einem der Ansprüche 1 bis 5, wobei das Hydroxylgruppen enthaltende Acrylharz eine Säurezahl von 1 bis 25 mg KOH/g, eine Hydroxylzahl von 80 bis 200 mg KOH/g und ein Zahlenmittel des Molekulargewichts von 1000 bis 10000 aufweist.

7. Verfahren zur Bildung eines mehrschichtigen Beschichtungsfilms mit einer Deckschicht auf einem zu beschichtenden Gegenstand, umfassend einen Schritt zum Auftragen der klaren Beschichtungszusammensetzung nach einem der Ansprüche 1 bis 6 zur Bildung einer Deckschicht.

8. Verfahren zur Bildung eines mehrschichtigen Beschichtungsfilms mit einer Deckschicht auf einem zu beschichtenden Gegenstand, umfassend
einen Schritt zum Auftragen einer Grundschichtzusammensetzung auf einen zu beschichtenden Gegenstand zur Bildung eines nicht gehärteten Grundschichtfilms,
einen Schritt zum Auftragen der klaren Beschichtungszuammensetzung nach einem der Ansprüche 1 bis 6 auf den nicht gehärteten Grundschichtfilm zur Bildung eines nicht gehärteten klaren Beschichtungsfilms, und
einen Schritt zum gleichzeitigen Erhitzen des nicht gehärteten Grundschichtfilms und des nicht gehärteten klaren Beschichtungsfilms.

## Revendications

1. Composition de revêtement transparente composée d'une résine acrylique contenant un groupe hydroxyle et un composé de polyisocyanate, dans laquelle
la résine acrylique contenant un groupe hydroxyle est un copolymère comportant un monomère éthyléniquement insaturé ayant un résidu de diol polycarbonate (A) et un ester de l'acide (méth)acrylique contenant un groupe hydroxyle (B) en tant que composants de copolymérisation,
le monomère éthyléniquement insaturé ayant un résidu de diol polycarbonate est un produit de réaction d'un monomère éthyléniquement insaturé contenant un groupe anhydride d'acide (a1) et un diol polycarbonate (a2), et le diol polycarbonate est représenté par la formule générale (I) : 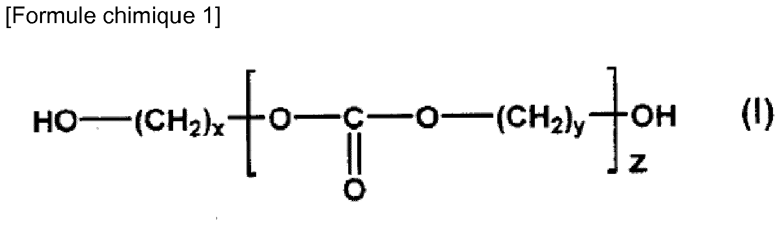 dans laquelle x et y représentent chacun indépendamment un entier valant de 1 à 8 et z représente un entier valant de 1 à 15.

2. Composition de revêtement transparente selon la revendication 1, dans laquelle le composé de polyisocyanate est au moins partiellement composé d'un composé d'isocyanate de type isocyanurate.

3. Composition de revêtement transparente selon la revendication 1 ou 2, dans laquelle le rapport de mélange de la résine acrylique contenant un groupe hydroxyle et du composé de polyisocyanate est un rapport tel que le nombre de groupes d'isocyanate dans le composé de polyisocyanate se situe dans la plage de 0,5 à 1,5 relativement au nombre des groupes hydroxyles dans la résine acrylique contenant un groupe hydroxyle pris comme valant 1.

4. Composition de revêtement transparente selon l'une quelconque des revendications 1 à 3, dans laquelle la quantité du résidu de diol polycarbonate est de 10 à 40 % en masse relativement à la quantité totale des composants de copolymérisation constituant la résine acrylique contenant un groupe hydroxyle.

5. Composition de revêtement transparente selon l'une quelconque des revendications 1 à 4, dans laquelle le monomère éthyléniquement insaturé contenant un groupe anhydride d'acide (a1) est au moins un élément sélectionné parmi le groupe constitué d'anhydride itaconique, d'anhydride maléique et d'anhydride citraconique.

6. Composition de revêtement transparente selon l'une quelconque des revendications 1 à 5, dans laquelle la résine acrylique contenant un groupe hydroxyle présente un indice d'acidité de 1 à 25 mgKOH/g, un indice hydroxyle de 80 à 200 mgKOH/g et un poids moléculaire moyen en nombre de 1.000 à 10.000.

7. Procédé de formation d'un film de revêtement multicouche ayant un revêtement supérieur sur un objet à revêtir, comprenant une étape d'application d'une composition de revêtement transparente selon l'une quelconque des revendications 1 à 6 afin de former un revêtement supérieur.

8. Procédé de formation d'un film de revêtement multicouche ayant un revêtement supérieur sur un objet à revêtir, comprenant
une étape d'application d'une composition de revêtement de base à l'objet à revêtir afin de former un film de revêtement de base non durci,
une étape d'application de la composition de revêtement transparente selon l'une quelconque des revendications 1 à 6 sur le film de revêtement de base non durci afin de former un film de revêtement transparent non durci, et
une étape de chauffage de manière simultanée du film de revêtement de base non durci et du film de revêtement transparent non durci
